(19) Europäisches Patentamt
European Patent Office
Office européen des brevets

(11) **EP 3 845 441 A1**

(12) **EUROPÄISCHE PATENTANMELDUNG**

(43) Veröffentlichungstag:
07.07.2021 Patentblatt 2021/27

(51) Int Cl.:
**B62D 59/04** (2006.01)   **B60L 15/20** (2006.01)
**B60D 1/30** (2006.01)

(21) Anmeldenummer: 20214013.3

(22) Anmeldetag: **15.12.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **03.01.2020   DE 102020200021**

(71) Anmelder: **VOLKSWAGEN AG**
**38440 Wolfsburg (DE)**

(72) Erfinder: **Witte, Bastian**
**38179 Groß Schwülper (DE)**

(54) **VERFAHREN ZUM BETREIBEN EINER ANTRIEBSVORRICHTUNG EINES ANHÄNGERS, WOBEI EIN ANTRIEBSSIGNAL IN ABHÄNGIGKEIT EINER KRÜMMUNG EINER KURVE ANGEPASST WIRD, EINER ANTRIEBSVORRICHTUNG SOWIE ANHÄNGER**

(57)    Die Erfindung betrifft ein Verfahren zum Betreiben einer Antriebsvorrichtung (4) eines Anhängers (3) für ein Kraftfahrzeug mit mindestens einem Antriebsmotor (6), wobei in Abhängigkeit von einem Antriebssignal (9) von einer elektronischen Recheneinrichtung (5) der Antriebs-vorrichtung (4) der Antriebsmotor (4) angetrieben wird, wobei das Antriebssignal (9) derart erzeugt wird, dass in Abhängigkeit von einer erfassten Krümmung (K) einer Kurve bei einer Kurvenfahrt des Anhängers (3) ein Antriebsmoment (M) für den Antriebsmotor (6) begrenzt wird. Ferner betrifft die Erfindung eine Antriebsvorrichtung (2) und einen Anhänger (3).

Fig.2

EP 3 845 441 A1

**Beschreibung**

Die Erfindung betrifft ein Verfahren zum Betreiben einer Antriebsvorrichtung eines Anhängers für ein Kraftfahrzeug mit mindestens einem Antriebsmotor, wobei in Abhängigkeit von einem Antriebssignal einer elektronischen Recheneinrichtung der Antriebsvorrichtung der Antriebsmotor angetrieben wird. Ferner betrifft die Erfindung eine Antriebsvorrichtung eines Anhängers sowie einen Anhänger.

Aus dem Stand der Technik sind bereits Anhänger bekannt, welche eine eigenständige Antriebseinrichtung aufweisen. Die Antriebseinrichtung kann insbesondere auch als eigener Fahrantrieb angesehen werden. Insbesondere bei bereits großen Knickwinkeln zwischen Zugfahrzeug und Anhänger kann eine zu hohe Antriebskraft dazu führen, dass dieser Knickwinkel ungewollt stark ansteigt, der zu einer kritischen Situation führen könnte. Der Anhänger schiebt auf Basis der Antriebseinrichtung vorwärts und ein Gespann aus dem Anhänger und dem Kraftfahrzeug klappt wie ein Taschenmesser zusammen. Dieses Zusammenklappen wird in der Literatur als Jack-Knifing bezeichnet. Dies kann insbesondere zu kritischen Situationen führen.

Die US 9,037,346 B2 offenbart ein Lenksteuerungssystem für einen Fahrzeugzug mit einem Schleppfahrzeug, einem ersten gezogenen Fahrzeug und mindestens einem Bodenkupplungselement und einem zweiten gezogenen Fahrzeug. Eine Lenkanordnung kann konfiguriert werden, um die Lenkung des mindestens einen bodenberührenden Elements zu steuern. Eine oder mehrere Abtastvorrichtungen können konfiguriert werden, um Orientierungsinformationen für ein oder mehrere der Zugfahrzeuge, das erste gezogene Fahrzeug und das zweite gezogene Fahrzeug während des Betriebs des Fahrzeugs zu bestimmen. Eine Lenkkorrektur kann für das zweite gezogene Fahrzeug basierend auf den bestimmten Orientierungsinformationen bestimmt werden. Die Lenkkorrektur kann für das zweite gezogene Fahrzeug durch Steuern der Lenkanordnung zum Steuern des ersten gezogenen Fahrzeugs angewendet werden.

Die GB 2466086 A offenbart einen Anhänger zum Abschleppen durch ein Fahrzeug, wobei der Anhänger eine Vielzahl von Rädern umfasst, wobei jedes Rad eine zugehörige Antriebseinheit aufweist, wobei jede Antriebseinheit so angeordnet ist, dass sie ein Drehmoment an ihr zugeordnetes Rad anlegt, unabhängig von dem Drehmoment, das von einer anderen Antriebseinheit aufgebracht wird, die einem anderen Rad zugeordnet ist. Ferner ist eine Anordnung von Sensoren zum Messen einer der Bewegung oder Masse des Anhängers zugeordneten Eigenschaft vorgeschlagen, wobei die gemessenen Eigenschaften eine Bestimmung der Menge an Drehmoment, die von jeder Antriebseinheit an ihr jeweiliges Rad angelegt werden soll, ermöglichen.

Aufgabe der vorliegenden Erfindung ist es, ein Verfahren, eine Antriebsvorrichtung sowie einen Anhänger zu schaffen, mittels welchen die Sicherheit im Straßenverkehr erhöht werden kann.

Diese Aufgabe wird durch ein Verfahren, eine Antriebsvorrichtung sowie einen Anhänger gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben einer Antriebsvorrichtung eines Anhängers für ein Kraftfahrzeug mit mindestens einem Antriebsmotor, wobei in Abhängigkeit von einem Antriebssignal von einer elektronischen Recheneinrichtung der Antriebsvorrichtung der Antriebsmotor angetrieben wird.

Es ist vorgesehen, dass das Antriebssignal derart erzeugt wird, dass in Abhängigkeit von einer erfassten Krümmung einer Kurve bei einer Kurvenfahrt des Anhängers ein Antriebsmoment für den Antriebsmotor begrenzt wird.

Dadurch ist es ermöglicht, dass ein sogenanntes Jack-Knifing, welches auch als Taschenmessereffekt bezeichnet werden kann, während der Kurvenfahrt reduziert werden kann. Somit kann die Sicherheit im Straßenverkehr erhöht werden.

Insbesondere bei dem Anhänger, welcher eine eigene Antriebseinrichtung, welcher der Antriebsmotor sein kann, aufweist und beispielsweise den Anhänger und damit das Gespann nach vorne schiebt, würde bei einer entsprechenden Kurvenfahrt ein Winkel zwischen der Antriebseinheit, also beispielsweise dem Kraftfahrzeug, und dem Anhänger verkleinert werden. Die erfindungsgemäße Lösung sieht vor, dass insbesondere, stabile Fahrt des Fahrzeuggespanns vorausgesetzt, der Knickwinkel in fester Relation zum Kurvenradius steht. Je kleiner der Kurvenradius wird, desto größer wird der Knickwinkel. Insbesondere sind hier geometrische Gesetzmäßigkeiten vorhanden. Es ist nun vorgeschlagen, das maximale Antriebsmoment des Anhängers in Abhängigkeit des gefahrenen Kurvenradius beziehungsweise des mathematischen Kehrwerts, der sogenannten Krümmung, zu begrenzen. Krümmung 0 bedeutet beispielsweise Geradeausfahrt des Fahrzeuggespanns, während zehn Meter Kurvenradius beispielsweise einer Krümmung von 0,1 1/Meter entsprechen würde.

Die Antriebsvorrichtung kann auch als Antriebssystem bezeichnet werden. Ferner kann die Antriebsvorrichtung als ein Assistenzsystem für den Anhänger angesehen werden.

Gemäß einer vorteilhaften Ausgestaltungsform wird unterhalb eines ersten vorgegebenen Krümmungsschwellwerts das Antriebssignal mittels der elektronischen Recheneinrichtung derart erzeugt, dass ein maximales Antriebsmoment bereitgestellt wird. Beispielsweise bei einer Geradeausfahrt des Fahrzeuggespanns mit dem Anhänger kann ein maximales Antriebsmoment für den Anhänger bereitgestellt werden. Mit anderen Worten wird das Antriebsmoment nicht begrenzt. Insbesondere kann auch unterhalb einer vorgegebenen Krümmung entsprechend das maximale Antriebsmoment bereitgestellt werden, da das Risiko eines Taschenmessereffekts unterhalb dieses Krümmungsschwellwerts gering ist.

Weiterhin vorteilhaft ist, wenn oberhalb eines zweiten vorgegebenen Krümmungsschwellwerts das Antriebsmoment maximal, bevorzugt auf Null, begrenzt wird. Insbesondere wird somit der Anhänger antriebsmomentlos betrieben. Mit anderen Worten kann vorgesehen sein, dass oberhalb des zweiten vorgegebenen Krümmungsschwellwerts der Anhänger kein Antriebsmoment mehr zur Verfügung stellt. Somit schiebt der Anhänger unterhalb des vorgegebenen zweiten Krümmungsschwellwerts nicht mehr. Insbesondere kann dadurch verhindert werden, dass bei bereits sehr engen Kurven und bei einer hohen Krümmung der Anhänger schiebt, wodurch das Risiko eines Jack-Knifings erhöht werden würde. Dadurch, dass der Anhänger nun antriebsmomentlos betrieben wird, ist lediglich die Zugmaschine, mit anderen Worten das Kraftfahrzeug, vorhanden, um ein Antriebsmoment zu erzeugen, das Gespann wird dadurch gestreckt. Dadurch kann zuverlässig der Taschenmessereffekt zwischen dem Kraftfahrzeug und dem Anhänger verhindert werden.

Ferner hat es sich als vorteilhaft erwiesen, wenn unterhalb des ersten vorgegebenen Krümmungsschwellwerts und oberhalb des zweiten vorgegebenen Krümmungsschwellwerts von dem Anhänger das Antriebsmoment linear zur Krümmung angepasst wird. Insbesondere kann somit in Abhängigkeit der beiden Schwellwerte das Antriebsmoment zur Verfügung gestellt werden beziehungsweise nicht zur Verfügung gestellt werden. Innerhalb dieser Krümmungsschwellwerte wird dann linear zur Krümmung das Antriebsmoment angepasst. Insbesondere verringert sich das Antriebsmoment vom ersten vorgegebenen Krümmungsschwellwert linear zum zweiten Krümmungsschwellwert. Dadurch kann verbessert der Taschenmessereffekt beim Fahrzeuggespann verhindert werden.

In einer weiteren vorteilhaften Ausgestaltungsform wird die Krümmung als Verhältnis von einer Gierrate des Anhängers zu einer aktuellen Geschwindigkeit des Anhängers mittels der elektronischen Recheneinrichtung bestimmt. Insbesondere ist die Krümmung der Quotient aus der Gierrate und der aktuellen Fahrgeschwindigkeit. Dadurch kann einfach und dennoch zuverlässig die Krümmung bestimmt werden. Dies kann insbesondere anhängerintern bestimmt werden. Es sind somit keine Signalleitungen zwischen dem Zugfahrzeug und dem Anhänger notwendig, um die Krümmung zu bestimmen. Dadurch kann bauteilreduziert und dennoch zuverlässig die Krümmung bestimmt werden.

Ferner hat es sich als vorteilhaft erwiesen, wenn die Gierrate und/oder die aktuelle Geschwindigkeit durch Auswertung von einem rechten Raddrehzahlsensor zumindest eines rechten Rads des Anhängers und durch Auswertung eines linken Raddrehzahlsensors zumindest eines linken Rads des Anhängers mittels der elektronischen Recheneinrichtung bestimmt werden. Die Fahrgeschwindigkeit ist beispielsweise der Mittelwert aus den Drehgeschwindigkeiten des rechten und des linken Anhängerrades. Die Radgeschwindigkeiten können dabei mit heute üblichen Raddrehzahlsensoren beispielsweise eines Antiblockiersystems erfasst werden. Bevorzugt stammen sie aus der Kommutierung der elektrischen Fahrmotoren. Die Radgeschwindigkeit ist dabei das Produkt aus Winkelgeschwindigkeit des Rades, und damit proportional zur Motordrehzahl, und des Reifenradius. Die Gierrate kann mit einem Drehratensensor erfasst werden, wie er im elektronischen Stabilitätsprogramm verbaut wird. Bevorzugt wird die Gierrate aber aus der Differenz der Radgeschwindigkeiten vom rechten und linken Rad und der kraftfahrzeugbekannten Spurweite errechnet. Als einzige Sensorsignale sind die Raddrehzahlen des rechten und linken Rades somit erforderlich. Zur Vermeidung von Rauschen können das Endsignal oder die beiden Eingangssignale noch tiefpassgefiltert werden. In Abhängigkeit dieser so ermittelten Krümmung kann nun das maximal erlaubte Moment des Fahrantriebs begrenzt werden. Bevorzugt werden nur Antriebsmomente, aber keine Bremsmomente begrenzt.

Ein weiterer Aspekt der Erfindung betrifft eine Antriebsvorrichtung eines Anhängers für ein Kraftfahrzeug mit zumindest einer elektronischen Recheneinrichtung und mit einem Antriebsmotor, wobei die Antriebsvorrichtung zum Durchführen eines Verfahrens nach dem vorhergehenden Aspekt ausgebildet ist. Insbesondere wird das Verfahren mittels der Antriebsvorrichtung durchgeführt. Die Antriebsvorrichtung kann auch als Antriebssystem bezeichnet werden.

Die elektronische Recheneinrichtung kann beispielsweise ein Computerprogramm aufweisen, welches dazu ausgebildet ist, das Verfahren nach dem vorhergehenden Aspekt durchzuführen, wenn dieses auf der elektronischen Recheneinrichtung abgearbeitet wird.

Ein nochmals weiterer Aspekt der Erfindung betrifft einen Anhänger für ein Kraftfahrzeug mit zumindest einer Antriebsvorrichtung nach dem vorhergehenden Aspekt.

Ein nochmals weiterer Aspekt der Erfindung betrifft ein Fahrzeuggespann mit zumindest einem Kraftfahrzeug, welches insbesondere als Zugfahrzeug bezeichnet wird, und mit einem Anhänger nach dem vorhergehenden Aspekt.

Vorteilhafte Ausgestaltungsformen des Verfahrens sind als vorteilhafte Ausgestaltungsformen der Antriebsvorrichtung, des Anhängers sowie des Fahrzeuggespanns anzusehen. Die Antriebsvorrichtung, der Anhänger sowie das Fahrzeuggespann weisen dazu gegenständliche Merkmale auf, welche eine Durchführung des Verfahrens oder eine vorteilhafte Ausgestaltungsform davon ermöglichen.

Zu der Erfindung gehören auch Weiterbildungen der erfindungsgemäßen Antriebsvorrichtung, des Anhängers sowie des Fahrzeuggespanns, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Antriebsvorrichtung, des Anhängers und des Fahrzeuggespanns hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:

Fig. 1     eine schematische Draufsicht auf eine Ausführungsform eines Fahrzeuggespanns mit einem Kraftfahrzeug und einer Ausführungsform eines Anhängers; und

Fig. 2     ein schematisches Diagramm zur Durchführung des Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

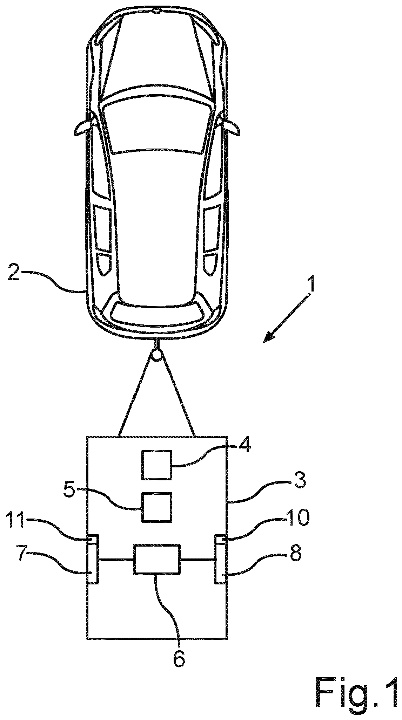

Fig. 1 zeigt in einer schematischen Draufsicht eine Ausführungsform eines Fahrzeuggespanns 1 mit einem Kraftfahrzeug 2, welches auch als Zugfahrzeug bezeichnet werden kann, und einem an dem Kraftfahrzeug 2 angehängten Anhänger 3. Der Anhänger 3 weist zumindest eine Antriebsvorrichtung 4 auf. Die Antriebsvorrichtung 4 weist zumindest eine elektronische Recheneinrichtung 5 sowie einen Antriebsmotor 6 auf. Mit dem Antriebsmotor 6 sind insbesondere Räder 7, 8 des Anhängers 3 antreibbar. Insbesondere ist ein linkes Rad 7 und ein rechts Rad 8 im vorliegenden Ausführungsbeispiel mittels des Antriebsmotors 6 antreibbar. Es ist selbstverständlich, dass der Anhänger 3 auch mehr als zwei Räder 7, 8 aufweisen kann.

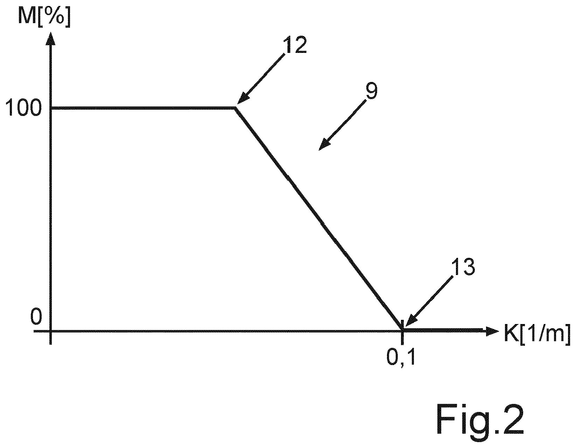

Beim Verfahren zum Betreiben des Antriebsvorrichtung 4 des Anhängers 3 für das Kraftfahrzeug 2 mit mindestens dem Antriebsmotor 6, wobei in Abhängigkeit von einem Antriebssignal 9 (Fig. 2) von der elektronischen Recheneinrichtung 5 der Antriebsvorrichtung 4 der Antriebsmotor 6 angetrieben wird. Es ist vorgesehen, dass das Antriebssignal 9 derart erzeugt wird, dass in Abhängigkeit von einer erfassten Krümmung K (Fig. 2) einer Kurve bei einer Kurvenfahrt des Anhängers 3 ein Antriebsmoment M (Fig. 2) für den Antriebsmotor 6 begrenzt wird.

Alternativ kann vorgesehen sein, dass die Antriebsvorrichtung 4 für eine rechte und linke Anhängerseite unterschiedliche einzeln ansteuerbare Antriebsmotoren aufweisen, so dass eine Moverfunktion zum Rangieren und eine Fahrstabilitätsregelung dargestellt werden können.

Insbesondere kann vorgesehen sein, dass die Krümmung K als Verhältnis von einer Gierrate des Anhängers 3 zu einer aktuellen Geschwindigkeit des Anhängers 3 mittels der elektronischen Recheneinrichtung 5 bestimmt wird. Hierzu kann beispielsweise vorgesehen sein, dass die Gierrate und/oder die aktuelle Geschwindigkeit durch Auswertung von einem rechten Drehzahlsensor 10 zumindest eines rechten Rads 8 des Anhängers 3 und durch Auswertung eines linken Drehzahlsensors 11 zumindest des linken Rads 7 des Anhängers 3 mittels der elektronischen Recheneinrichtung 5 bestimmt werden.

Fig. 2 zeigt in einer schematischen Ansicht ein Diagramm zum Verfahren. Insbesondere ist auf der Abszisse des Diagramms die Krümmung K aufgetragen und auf der Ordinate das Antriebsmoment M. Die Krümmung K ist in 1/Meter angegeben und das Antriebsmoment M ist in Prozent angegeben, wobei 100 Prozent dem maximalen Antriebsmoment M entspricht und 0 Prozent keinem Antriebsmoment M entspricht.

Insbesondere zeigt die Fig. 2 somit, dass beispielsweise der Knickwinkel in fester Relation zum Kurvenradius und damit zu dessen Kehrwert, der Krümmung steht. Je kleiner der Kurvenradius wird (je größer also die Krümmung wird), desto größer wird der Knickwinkel. Zur Lösung dieses Problems ist vorgeschlagen, dass das maximal erlaubte Antriebsmoment M des Anhängers 3 in Abhängigkeit des gefahrenen Kurvenradius beziehungsweise des mathematischen Kehrwerts, der sogenannten Krümmung K, zu begrenzen. Krümmung 0 bedeutet Geradeausfahrt, 10 Meter Kurvenradius beispielsweise würde einer Krümmung K von 0,1 1/Meter entsprechen. Die Krümmung K bietet mathematische Vorteile. Beispielsweise ein unendlicher Kurvenradius ist zahlenmäßig schwer darstellbar, zudem würde das Signal beim Wechsel von Rechts- zur Linkskurve von Minus unendlich zu Plus unendlich springen. Insbesondere die häufige Geradeausfahrt ist als Radius schwer darstellbar. Die Krümmung K kann recht einfach bestimmt werden. Sie ist der Quotient aus Gierrate $\dot{\varphi}$ und aktuelle Geschwindigkeit v:

$$K = \frac{\dot{\varphi}}{V}.$$

Die Fahrgeschwindigkeit ist wieder recht einfach bestimmbar als Mittelwert aus der Drehgeschwindigkeit des rechten und des linken Anhängerrades, somit des rechten Rads 8 und des linken Rads 7:

$$v = \frac{v_{Rad,links} + v_{Rad,rechts}}{2}$$

Die Radgeschwindigkeiten $v_{Rad,rechts}$ und $v_{Rad,links}$ können dabei mit den heute üblichen Raddrehzahlsensoren 10, 11 eines Antiblockiersystems erfasst werden. Bevorzugt stammen sie aus der Kommutierung der elektrischen Fahrmotoren. Die Radgeschwindigkeit ist dabei das Produkt aus Winkelgeschwindigkeit des Rads 7, 8 und damit proportional zur Motordrehzahl, und des Reifenradius. Die Gierrate $\dot\varphi$ kann mit einem Drehratensensor erfasst werden, wie im elektronischen Stabilitätsprogramm verbaut werden. Bevorzugt kann die Gierrate $\dot\varphi$ aber aus der Differenz der Radgeschwindigkeiten vom rechten und vom linken Rad 7, 8 und der vom Anhänger 3 bekannten Spurweite s errechnet werden:

$$\dot\varphi = \frac{v_{Rad,rechts} - v_{Rad,links}}{s}$$

Damit ergibt sich recht einfach:

$$K = \frac{2 * (v_{Rad,rechts} - v_{Rad,links})}{s * (v_{Rad,links} + v_{Rad,rechts})}$$

Als einzige Sensorsignale sind so die Raddrehzahlen des rechten und des linken Rades 7, 8 erforderlich. Zur Vermeidung von Rauschen kann das Endsignal oder die beiden Eingangssignale noch tiefpassgefiltert werden.

In Abhängigkeit dieser so ermittelten Krümmung K kann nun das maximal erlaubte Antriebsmoment M des Fahrantriebs, insbesondere der Antriebseinrichtung 6, begrenzt werden. Bevorzugt werden beispielsweise nur Antriebsmomente M, aber keine Bremsmomente begrenzt.

Fig. 2 zeigt ferner, dass unterhalb eines ersten vorgegebenen Krümmungsschwellwerte 12 das Antriebssignal mittels der elektronischen Recheneinrichtung 5 derart erzeugt wird, dass ein maximales Antriebsmoment M bereitgestellt wird. Ferner kann insbesondere vorgesehen sein, dass oberhalb eines zweiten vorgegebenen Krümmungsschwellwerts 13 der Anhänger 3 antriebsmomentlos betrieben wird. Mit andere Worten wird das Antriebsmoment M maximal, bevorzugt auf Null, begrenzt. Ferner zeigt die Fig. 2 insbesondere, dass unterhalb des ersten vorgegebenen Krümmungsschwellwerts 12 und oberhalb des zweiten vorgegebenen Krümmungsschwellwerts 13 der Anhänger 3 das Antriebsmoment M linear zur Krümmung angepasst wird. Dies ist insbesondere zwischen dem ersten vorgegebenen Krümmungsschwellwerts 12 und dem zweiten vorgegebenen Krümmungsschwellwerts 13 in dem Diagramm der Fig. 2 gezeigt.

Insbesondere kann ferner vorgesehen sein, dass zusätzlich in Abhängigkeit der aktuellen Geschwindigkeit des Anhängers 3 das Antriebssignal 9 mittels der elektronischen Recheneinrichtung 5 erzeugt wird.

Insgesamt zeigt die Erfindung ein Verfahren zur Verhinderung von Jack-Knifing des Fahrzeuggespanns 1.

**Bezugszeichenliste**

1 Fahrzeuggespann
2 Kraftfahrzeug
3 Anhänger
4 Antriebsvorrichtung
5 Elektronische Recheneinrichtung
6 Antriebsmotor
7 Linkes Rad
8 Rechtes Rad
9 Antriebssignal
10 Rechter Drehzahlsensor
11 Linker Drehzahlsensor
12 Erster vorgegebener Krümmungsschwellwerts
13 zweiter vorgegebener Krümmungsschwellwerts
K Krümmung
M Antriebsmoment

**Patentansprüche**

1. Verfahren zum Betreiben einer Antriebsvorrichtung (4) eines Anhängers (3) für ein Kraftfahrzeug (2) mit mindestens einem Antriebsmotor (6), wobei in Abhängigkeit von einem Antriebssignal (9) von einer elektronischen Recheneinrichtung (5) der Antriebsvorrichtung (4) der Antriebsmotor (6) angetrieben wird,
**dadurch gekennzeichnet, dass**
das Antriebssignal (9) derart erzeugt wird, dass in Abhängigkeit von einer erfassten Krümmung (K) einer Kurve bei einer Kurvenfahrt des Anhängers (3) ein Antriebsmoment (M) für den Antriebsmotor (6) begrenzt wird.

2. Verfahren nach Anspruch 1,
**dadurch gekennzeichnet, dass**
unterhalb eines ersten vorgegebenen Krümmungsschwellwerts (12) das Antriebssignal (9) mittels der elektronischen Recheneinrichtung (5) derart erzeugt wird, dass ein maximales Antriebsmoment (M) der Antriebseinrichtung (6) bereitgestellt wird.

3. Verfahren nach Anspruch 1 oder 2,
**dadurch gekennzeichnet, dass**
oberhalb eines zweiten vorgegebenen Krümmungsschwellwerts (13) das Antriebsmoment (M) maximal, bevorzugt auf Null, begrenzt wird.

4. Verfahren nach Anspruch 2 und 3,
**dadurch gekennzeichnet, dass**
unterhalb des ersten vorgegebenen Krümmungsschwellwerts (12) und oberhalb des zweiten vorgegebenen Krümmungsschwellwerts (13) von dem Anhänger (3) das Antriebsmoment (M) linear zur Krümmung begrenzt wird.

5. Verfahren nach einem der vorhergehenden Ansprüche,
   **dadurch gekennzeichnet, dass**
   zusätzlich in Abhängigkeit einer aktuellen Geschwindigkeit des Anhängers (3) das Antriebssignal (9) mittels der elektronischen Recheneinrichtung (5) erzeugt wird.

6. Verfahren nach einem der vorhergehenden Ansprüche,
   **dadurch gekennzeichnet, dass**
   die Krümmung (K) als Verhältnis von einer Gierrate des Anhängers (3) zu einer aktuellen Geschwindigkeit des Anhängers (3) mittels der elektronischen Recheneinrichtung (5) bestimmt wird.

7. Verfahren nach Anspruch 6,
   **dadurch gekennzeichnet, dass**
   die Gierrate und/oder die aktuelle Geschwindigkeit durch Auswertung von einem rechten Raddrehzahlsensor (10) zumindest eines rechten Rads (8) des Anhängers (3) und durch Auswertung eines linken Radrehzahlsensors (11) zumindest eines linken Rads (7) des Anhängers (3) mittels der elektronischen Recheneinrichtung (5) bestimmt werden.

8. Verfahren nach Anspruch 7,
   **dadurch gekennzeichnet, dass**
   Signale des rechten Raddrehzahlsensors (10) und des linken Radrehzahlsensors (11) aus der Kommutierung des mindestens einen Antriebsmotors (6) bestimmt werden.

9. Antriebsvorrichtung (4) eines Anhängers (3) für ein Kraftfahrzeug (2) mit zumindest einer elektronischen Recheneinrichtung (5) und mit einem Antriebmotor (6), wobei die Antriebsvorrichtung (4) zum Durchführen eines Verfahrens nach einem der Ansprüche 1 bis 8 ausgebildet ist.

10. Anhänger (3) für ein Kraftfahrzeug (2) mit zumindest einer Antriebsvorrichtung (4) nach Anspruch 9.

Fig.1

Fig.2

**Europäisches Patentamt**

**European Patent Office**

**Office européen des brevets**

# EUROPÄISCHER RECHERCHENBERICHT

**Nummer der Anmeldung**

EP 20 21 4013

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 110520 A1 (STEYR MOTORS GMBH [AT]) 15. November 2018 (2018-11-15) | 1-3,5-10 | INV.<br>B62D59/04<br>B60L15/20<br>B60D1/30 |
| A | * Absätze [0005], [0006], [0027], [0028], [0029] * | 4 | |
| | ----- | | |
| X | DE 10 2010 031158 A1 (ZAHNRADFABRIK FRIEDRICHSHAFEN [DE]) 12. Januar 2012 (2012-01-12) | 1-4,9,10 | |
| A | * Absätze [0005], [0009], [0018] * | 5-8 | |
| | ----- | | |
| X | DE 41 33 912 A1 (MANNESMANN AG [DE]) 15. April 1993 (1993-04-15) | 1,9,10 | |
| A | * Ansprüche 1,2 * | 2-8 | |
| | ----- | | |
| X | DE 10 2016 210343 A1 (ZAHNRADFABRIK FRIEDRICHSHAFEN [DE]) 14. Dezember 2017 (2017-12-14) | 1,9,10 | |
| A | * Ansprüche 5,6 * | 2-8 | |
| | ----- | | RECHERCHIERTE SACHGEBIETE (IPC) |
| A | DE 10 2015 226695 A1 (VOLKSWAGEN AG [DE]) 29. Juni 2017 (2017-06-29) * Abbildungen * * Absätze [0008], [0009], [0010] * | 1-10 | B60L<br>B60D<br>B62D |
| | ----- | | |
| A | DE 10 2010 062979 A1 (BOSCH GMBH ROBERT [DE]) 14. Juni 2012 (2012-06-14) * Anspruch 1 * | 1-10 | |
| | ----- | | |
| A | US 2013/079979 A1 (SHEIDLER ALAN D [US] ET AL) 28. März 2013 (2013-03-28) * Absatz [0025]; Abbildungen 3,4,5 * | 1-10 | |
| | ----- | | |
| A | US 2013/079980 A1 (VUK CARL T [US] ET AL) 28. März 2013 (2013-03-28) * Abbildungen * | 1-10 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 7. Mai 2021 | Thiercelin, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 4013

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2021

| Im Recherchenbericht angeführtes Patentdokument | Datum der Veröffentlichung | Mitglied(er) der Patentfamilie | Datum der Veröffentlichung |
|---|---|---|---|
| DE 102017110520 A1 | 15-11-2018 | DE 102017110520 A1<br>WO 2018210865 A1 | 15-11-2018<br>22-11-2018 |
| DE 102010031158 A1 | 12-01-2012 | KEINE | |
| DE 4133912 A1 | 15-04-1993 | BR 9206409 A<br>CN 1071382 A<br>DE 4133912 A1<br>EP 0607218 A1<br>JP H07500239 A<br>WO 9307023 A1 | 27-12-1994<br>28-04-1993<br>15-04-1993<br>27-07-1994<br>05-01-1995<br>15-04-1993 |
| DE 102016210343 A1 | 14-12-2017 | KEINE | |
| DE 102015226695 A1 | 29-06-2017 | KEINE | |
| DE 102010062979 A1 | 14-06-2012 | KEINE | |
| US 2013079979 A1 | 28-03-2013 | CN 103826882 A<br>EA 201490524 A1<br>EP 2758258 A1<br>US 2013079979 A1<br>WO 2013043996 A1 | 28-05-2014<br>30-06-2014<br>30-07-2014<br>28-03-2013<br>28-03-2013 |
| US 2013079980 A1 | 28-03-2013 | CN 103826431 A<br>US 2013079980 A1<br>WO 2013043969 A1 | 28-05-2014<br>28-03-2013<br>28-03-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9037346 B2
- GB 2466086 A